(19) Europäisches Patentamt
European Patent Office
Office européen des brevets

(11) Veröffentlichungsnummer : **0 410 365 B1**

(12) **EUROPÄISCHE PATENTSCHRIFT**

(45) Veröffentlichungstag der Patentschrift : **23.03.94 Patentblatt 94/12**

(51) Int. Cl.$^5$ : **C09D 5/44,** C08G 18/58, C08L 63/00, C08L 61/34

(21) Anmeldenummer : **90114133.3**

(22) Anmeldetag : **24.07.90**

(54) **Verfahren zur Herstellung von selbstvernetzenden kationischen Lackbindemitteln.**

(30) Priorität : **28.07.89 AT 1819/89**

(43) Veröffentlichungstag der Anmeldung : **30.01.91 Patentblatt 91/05**

(45) Bekanntmachung des Hinweises auf die Patenterteilung : **23.03.94 Patentblatt 94/12**

(84) Benannte Vertragsstaaten : **BE DE ES FR GB IT NL SE**

(56) Entgegenhaltungen :
**EP-A- 0 209 857**
**EP-A- 0 304 854**
**DE-A- 3 306 111**

(73) Patentinhaber : **Vianova Kunstharz Aktiengesellschaft**
**Bundesstrasse 175**
**A-8402 Werndorf (AT)**

(72) Erfinder : **Paar, Willibald, Dr.**
**Schanzelgasse 19**
**A-8010 Graz (AT)**
Erfinder : **Pampouchidis, George, Dr.**
**Obere Teichstrasse 31**
**A-8010 Graz (AT)**

**EP 0 410 365 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von selbstvernetzenden, nach Protonierung wasserverdünnbaren kationischen Lackbindemitteln auf Basis der Reaktionsprodukte aus Aminoalkylierungsprodukten von Phenolen mit Epoxidharzen, wobei die in der letzten Verfahrensstufe eingesetzten Diepoxidharze anteilig mit Mono- und Diaminen modifiziert werden.

Verfahren zur Herstellung derartiger Reaktionsprodukte aus Aminoalkylierungsprodukten von Phenolen mit Epoxidharzen werden bereits in den AT-PSS 382 160, 384 232, 384 818, 385 048, 386 220, 386 221 und 390 071 beschrieben. Die AT-PS 382 160 betrifft ein Verfahren zur Herstellung von selbstvernetzenden, nach Protonierung wasserverdünnbaren kationischen Lackbindemitteln auf Basis von Reaktionsprodukten aus Aminoalkylierungsprodukten von Phenolen mit Epoxidharzen, welches dadurch gekennzeichnet ist, daß man

(1) ein durchschnittlich mindestens eine NH-Gruppe pro Molekül aufweisendes Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder primär-tertiären Alkyldiamin, und Formaldehyd oder einer formaldehydabspaltenden Verbindung, mit

(2) einem halblockierten Diisocyanat umsetzt, und in einer weiteren Reaktionsstufe

(3) 50 bis 100 % der phenolischen Hydroxylgruppen mit Epoxidverbindungen, vorzugsweise Diepoxidharzen mit einem Epoxidäquivalentgewicht zwischen 50 und 2000, reagiert.

Bei der Weiterführung dieser Arbeiten wurde nun gefunden, daß die applikatorischen und rheologischen Eigenschaften der Überzugsmittel auf Basis der Produkte der AT-PS 382160 verbessert werden können, wenn die in der letzten Verfahrensstufe eingesetzten Diepoxidharze durch eine teilweise Umsetzung mit Mono- oder Diaminen modifiziert werden.

Die vorliegende Erfindung betrifft demgemäß ein Verfahren zur Herstellung von selbstvernetzenden, nach Protonierung wasserverdünnbaren kationischen Lackbindemitteln auf der Basis von Reaktionsprodukten aus Aminoalkylierungsprodukten von Phenolen und Epoxidharzen, die durch Umsetzung von

(1) einem durchschnittlich mindestens eine NH-Gruppe pro Molekül aufweisenden Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder primär-tertiären Alkyldiamin, und Formaldehyd oder einer formaldehydabspaltenden Verbindung, mit

(2) einem halbblockierten Diisocyanat, und folgender Reaktion von

(3) 50 bis 100 % der phenolischen Hydroxylgruppen mit Epoxidverbindungen, vorzugsweise Diepoxidharzen mit einem Epoxidäquivalentgewicht zwischen 50 und 2000, erhalten wurden,

welches dadurch gekennzeichnet ist, daß man 5 bis 70 Mol %, vorzugsweise 10 bis 40 Mol %, der Glycidylgruppen der in Stufe (3) eingesetzten Diepoxidharze vor deren Reaktion mit dem in Stufe (2) erhaltenen Zwischenprodukt oder gegebenenfalls gleichzeitig mit der Reaktion gemäß Stufe (3) mit Mono- und/oder Diaminen umsetzt.

Durch die Modifikation ergeben sich weitere Möglichkeiten zur Beeinflussung der applikatorischen und rheologischen Eigenschaften der Bindemittel, der damit formulierten Lacke und der abgeschiedenen Filme bei deren Vernetzung.

Die Herstellung der eingesetzten Vor- und Zwischenprodukte erfolgt entsprechend der in der AT-PS 382 160 beschriebenen Weise.

Für die weitere Modifizierung gemäß der vorliegenden Erfindung können als Monoamine im wesentlichen alle primären und sekundären Amine, wie die homologen Mono- oder Dialkylmonoamine bzw. die homologen Mono- oder Dialkanolmonoamine eingesetzt werden.

Als Diamine finden bevorzugt Umsetzungsprodukte von diprimären Aminen mit 2 Mol Monoepoxidverbindung Einsatz.

Primär-tertiäre Diamine wie Dimethylaminopropylamin und Homologe können ebenfalls verwendet werden.

In einer speziellen Ausführungsform werden als aminfunktionelle Verbindungen die in der EP-PS 0076955 beschriebenen Oxazolidinamine der allgemeinen Formeln

(I)

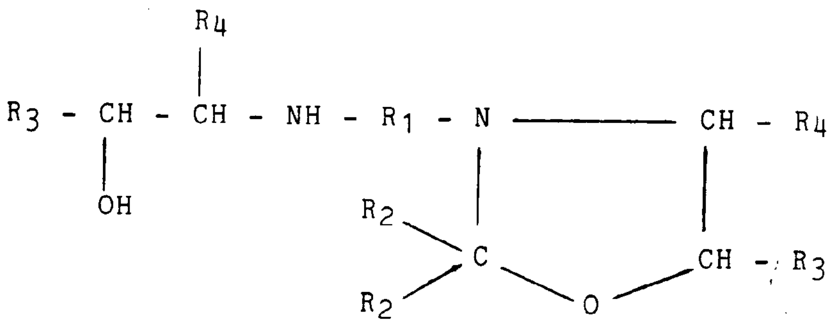

und/oder

(II)

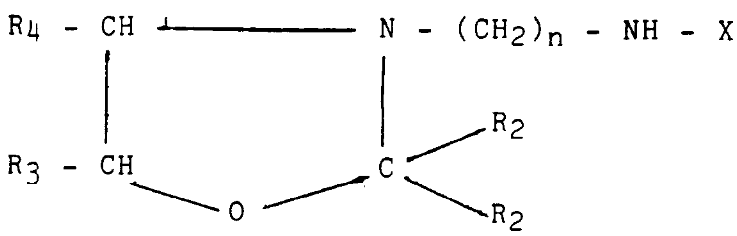

und/oder

(III)

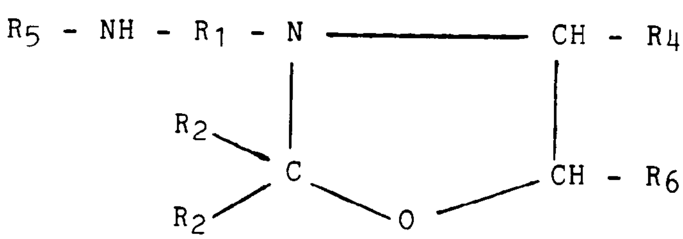

eingesetzt, wobei

$R_1$ einen geradkettigen oder verzweigten oder cyclischen Alkylenrest mit 2 bis 12 C-Atomen oder einen Aralkylenrest,

$R_2$ einen geradkettigen oder verzweigten Alkylrest mit 1 bis 4 C-Atomen, einen Arylrest oder ein H-Atom oder für beide $R_2$ gemeinsam einen ringbildenden, gegebenenfalls mit Alkyl-, Aryl- oder Alkoxyresten substituierten Alkylenrest,

$R_3$ einen gesättigten oder ungesättigten, gegebenenfalls Äther- oder Estergruppierungen enthaltenden aliphatischen oder cycloaliphatischen oder aromatischen Kohlenwasserstoffrest,

$R_4$ H oder $CH_3$-,

n 2 bis 4 und

X entweder

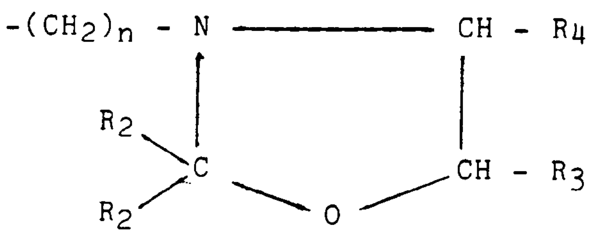

oder

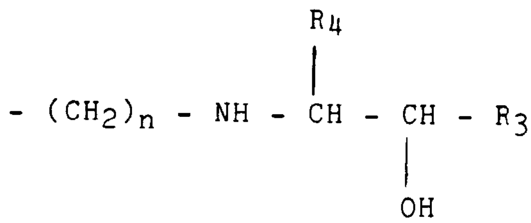

$R_5$ einen nach Reaktion mit einem aktiven Wasserstoffatom verbleibenden Rest eines in bezug auf die Doppelbindungen monofunktionellen Acryl- oder Methacrylmonomeren und

$R_6$ ein Wasserstoffatom oder einen Alkylrest

bedeutet.

Die Umsetzung der Di- bzw. Polyepoxidverbindungen mit den Aminen wird entweder vor oder gleichzeitig mit der Reaktion der Epoxidverbindungen mit der Phenolkomponente durchgeführt. In beiden Fällen erfolgt die Reaktion bei 60 - 100°C, wobei die Mengenverhältnisse und die Reaktionsbedingungen so gewählt werden, daß die Endprodukte keine freien Epoxidgruppen aufweisen. Zwischen den nach den beiden Verfahrensvarianten hergestellten Endprodukten konnten keine Unterschiede festgestellt werden.

Zur Erzielung der Wasserverdünnbarkeit werden die basischen Gruppen des Reaktionsproduktes mit Säuren, vorzugsweise mit Ameisensäure, Essigsäure oder Milchsäure, partiell oder vollständig neutralisiert. Für eine praxisgerechte Verdünnbarkeit genügt dafür üblicherweise eine Neutralisation von 20 - 60 % der basischen Gruppen oder eine Menge von ca. 20 bis 60 Millimol Säure pro 100 g Festharz. Die Bindemittel werden dann mit deionisiertem Wasser auf die gewünschte Konzentration verdünnt. Gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierungsverfahren sind dem Fachmann bekannt und in der Literatur beschrieben. Die Härtung der abgeschiedenen Überzüge erfolgt beim Einsatz als Grundierung bei Temperaturen zwischen 150 und 170°C während 10 bis 30 Minuten. Soferne die Bindemittel nicht in ausreichendem Maße selbstvernetzende Strukturen aufweisen, können auch zusätzliche Vernetzungsmittel, wie blockierte Iscyanate oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

In den Beispielen werden folgende Abkürzungen benutzt:

| | |
|---|---|
| PH | Phenol |
| NPH | Nonylphenol |
| BPA | Bisphenol A |
| DMAPA | N,N-Dimethylaminopropylamin |
| DEAPA | N,N-Diethylaminopropylamin |
| EHA | 2-Ethylhexylamin |
| EGL | Monoethylglykolmonoethyläther |
| MIC I | mit EGL halblockiertes Toluylendiisocyanat |
| MIC II | mit 2-Ethylhexanol halbblockiertes Toluylendiisocyanat |
| EPH I | Diepoxidharz auf Basis von Bisphenol A (Epoxidäquivalentgewicht ca. 190) |
| EPH II | Diepoxidharz auf Basis von Bisphenol A (Epoxidäquivalentgewicht ca. 480) |
| EPH III | Glycidylether von tertiären $C_9/C_{11}$-Monocarbonsäuren (Epoxidäquivalentgewicht 250) |
| OXAM I | Oxazolidinamin aus 1 Mol Aminoethylethanolamin, 1 Mol 2-Ethylhexylacrylat und 1 Mol Formaldehyd (MG = 300) |
| OXAM II | Oxazolidinamin aus 1 Mol Diethylentriamin, 2 Mol Octenoxid und 2 Mol Formaldehyd (MG = 231) |
| DIAM | Umsetzungsprodukt von 1 Mol Pentamethylendiamin mit 2 Mol EPH III (MG = 602) |
| DOLA | Diethanolamin |
| DGDM | Diethylenglykoldimethylether |
| MOP | Methoxypropanol |

Die Herstellung der modifizierten Aminoalkylierungsprodukte (VP 1 bis 4) erfolgt gemäß den Beispielen in der AT-PS 382160 in den in der Tabelle 1 angegebenen Mengenverhältnissen.

Herstellung der erfindungsgemäßen Bindemittel

Beispiele 1 - 6

Die Umsetzung der in der Tabelle 2 angegebenen Ausgangsstoffe kann sowohl im Ein- bzw. Zweistufenverfahren erfolgen. Ein über die üblichen Schwankungen hinausgehender Unterschied in den Eigenschaften der Produkte konnte nicht festgestellt werden.

Beim Einstufenverfahren werden die Komponenten in 70%iger Lösung im in Tabelle 2 angegebenen Lösemittel bei 95 bis 100°C bis zur vollständigen Umsetzung der Epoxidgruppen reagiert. Gegebenenfalls eingesetzte Monoglycidylverbindungen werden in diesem Falle vorzugsweise erst nach der Reaktion der Diepoxidharze mit den Aminverbindungen zur Umsetzung gebracht.

Beim Zweistufenverfahren wird das Diepoxidharz in erster Stufe bei 60 bis 80°C mit der Aminverbindung umgesetzt, bis die den Aminowasserstoffen stöchiometrisch entsprechende Menge an Epoxidgruppen reagiert hat. Nach Zugabe des modifizierten Aminoalkylierungsproduktes (VP) und der gegebenenfalls eingesetzten Monoglycidylverbindung sowie Einstellen eines Festkörpergehaltes von 70 bis 75 % mit Lösemittel erfolgt die weitere Reaktion bei 90 bis 100°C bis zu einem Epoxid-wert von praktisch 0.

Für die weitere Verarbeitung werden die Produkte auf den in der Tabelle 2 angegebenen Festkörpergehalt eingestellt. Als Lösemittel dienen vor allem Glykolether, vorzugsweise Methoxypropanol.

Die Spalte "Löslichkeit" gibt die Menge Ameisensäure (in Millimol) pro 100 g Festharz an, die notwendig ist, um, nach Verdünnen mit Wasser auf einen Festkörpergehalt von 15 %, einen stabilen Klarlack zu ergeben.

Die gemäß den Beispielen 1 bis 6 hergestellten Bindemittel wurden als Klarlack auf Stahlblech elektrisch abgeschieden. Zur Herstellung des Klarlackes wurde die gemäß Beispiel resultierende Harzlösung mit einer 0,8 % Metall entsprechenden Menge Dibutylzinndilaurat (bezogen auf Festharz) versetzt und mit deionisiertem Wasser auf einen Festkörpergehalt von 15 % verdünnt. Die Filme wurden 20 Minuten bei 160°C eingebrannt und zeigten bei einer Schichtstärke von 20 ± 2 µm eine Methylethylketonfestigkeit von mindestens 150 Doppelhüben.

Tabelle 1

| VP | PHENOL Tle | (Mol) | FORMALDEHYD Tle | (Mol) | AMIN Tle | (Mol) | MIC Tle | (Mol) | LÖSEMITTEL (result.FK) | MOL-GEW. | PHENOL. OH |
|---|---|---|---|---|---|---|---|---|---|---|---|
| 1 | 220 NPH | (1,0) | 30 | (1,0) | 102 DMAPA | (1,0) | 264 MIC I | (1,0) | DGDM (80 %) | 598 | 1 |
| 2 | 228 BPA | (1,0) | 30 | (1,0) | 130 DEAPA | (1,0) | 304 MIC II | (1,0) | DGDM (70 %) | 674 | 2 |
| 3 | 228 BPA | (1,0) | 60 | (2,0) | 260 DEAPA | (2,0) | 528 MIC I | (2,0) | DGDM (70 %) | 1040 | 2 |
| 4 | 94 PH | (1,0) | 60 | (2,0) | 102 DMAPA<br>129 EHA | (1,0)<br>(1,0) | 304 MIC II | (1,0) | DGDM (70 %) | 653 | 1 |

Tabelle 2

| Beispiel | EPOXIDVERBINDUNG Teile | (Val) | VP Teile | (Mol) | AMINVERBINDUNG Teile | (Val) | Lösemittel (FK) | Löslichkeit mMol/100 g Festharz |
|---|---|---|---|---|---|---|---|---|
| 1 | 1824 EPH II | (3,8) | 1076 VP 1<br>506 VP 2 | (1,8)<br>(0,75) | 150 OX AM 1 | (0,5) | MOP 65 % | 40 |
| 2 | 760 EPH I | (4,0) | 674 VP 2 | (1,0) | 210 DOLA | (2,0) | EGL 70 % | 40 |
| 3 | 960 EPH II | (2,0) | 653 VP 4 | (1,0) | 301 DIAM | (1,0) | DGDM 65 % | 40 |
| 4 | 190 EPH I<br>480 EPH II | (1,0)<br>(1,0) | 539 VP 2 | (0,8) | 26 DEAPA | (0,4) | MOP 60 % | 35 |
| 5 | 380 EPH I<br>250 EPH III | (2,0)<br>(1,0) | 1040 VP 3 | (1,0) | 231 OXAM II | (1,0) | MOP 65 % | 40 |
| 6 | 400 EPH I<br>275 EPH III | (2,1)<br>(1,1) | 1040 VP 3 | (1,0) | 63 DOLA<br>77 EHA | (0,6)<br>(0,6) | MOP 65 % | 35 |

## Patentansprüche

1. Verfahren zur Herstellung von selbstvernetzenden, nach Protonierung wasserverdünnbaren kationischen Lackbindemitteln auf der Basis von Reaktionsprodukten aus Aminoalkylierungsprodukten von Phenolen und Epoxidharzen, die durch Umsetzung von

(1) einem durchschnittlich mindestens eine NH-Gruppe pro Molekül aufweisenden Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder primär-tertiären Alkyldiamin, und Formaldehyd oder einer formaldehydabspaltenden Verbindung, mit

(2) einem halbblockierten Diisocyanat, und folgender Reaktion von

(3) 50 bis 100 % der phenolischen Hydroxylgruppen mit Epoxidverbindungen, vorzugsweise Diepoxidharzen mit einem Epoxidäquivalentgewicht zwischen 50 und 2000, erhalten wurden,

dadurch gekennzeichnet, daß man 5 bis 70 Mol %, vorzugsweise 10 bis 40 Mol %, der Glycidylgruppen der in Stufe (3) eingesetzten Diepoxidharze vor deren Reaktion mit dem in Stufe (2) erhaltenen Zwischenprodukt oder gegebenenfalls gleichzeitig mit der Reaktion gemäß Stufe (3) mit Mono- und/oder Diaminen umsetzt.

2. Verfahren nach Anspruch 1, dadurch gekennzeichnet, daß man als Monoamine primäre und sekundäre Amine einsetzt.

3. Verfahren nach Anspruch 1, dadurch gekennzeichnet, daß man als Monoamine primäre und sekundäre Alkanolamine einsetzt.

4. Verfahren nach Anspruch 1, dadurch gekennzeichnet, daß man als Diamine Umsetzungsprodukte von diprimären Aminen mit 2 Mol Monoepoxidverbindung einsetzt.

5. Verfahren nach Anspruch 1, dadurch gekennzeichnet, daß man als Diamine primär-tertiäre Diamine einsetzt.

6. Verfahren nach Anspruch 1, dadurch gekennzeichnet, daß man als aminfunktionelle Verbindungen Oxazolidinamine der allgemeinen Formeln

(I)

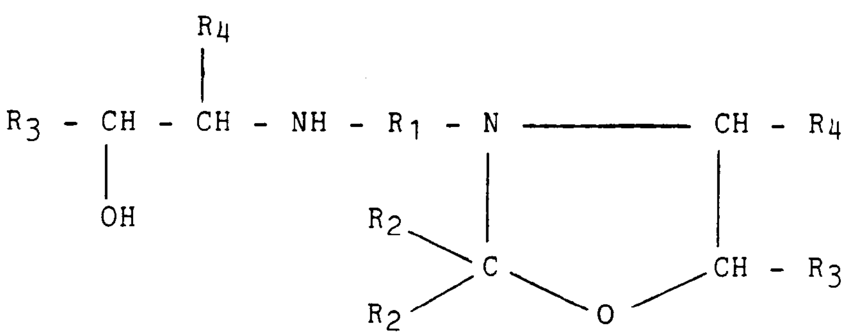

und/oder

(II)

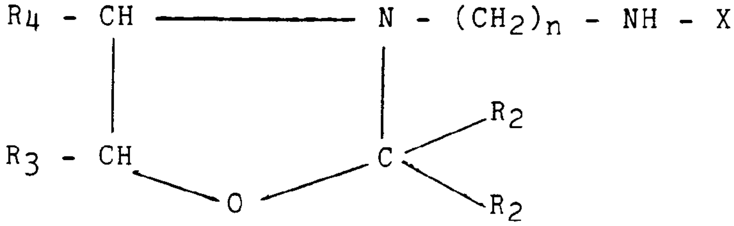

und/oder

(III) 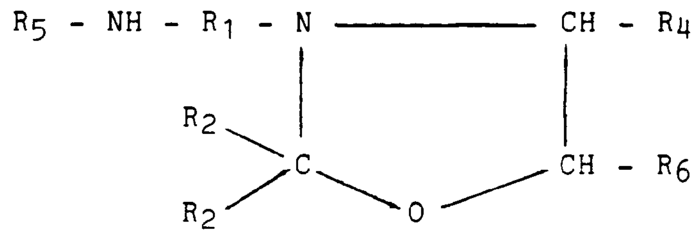

einsetzt, wobei

- $R_1$ einen geradkettigen oder verzweigten oder cyclischen Alkylenrest mit 2 bis 12 C-Atomen oder einen Aralkylenrest,
- $R_2$ einen geradkettigen oder verzweigten Alkylrest mit 1 bis 4 C-Atomen, einen Arylrest oder ein H-Atom oder für beide $R_2$ gemeinsam einen ringbildenden, gegebenenfalls mit Alkyl-, Aryl- oder Alkoxyresten substituierten Alkylenrest,
- $R_3$ einen gesättigten oder ungesättigten, gegebenenfalls Äther- oder Estergruppierungen enthaltenden aliphatischen oder cycloaliphatischen oder aromatischen Kohlenwasserstoffrest,
- $R_4$ H oder $CH_3$-,
- n 2 bis 4 und
- X entweder

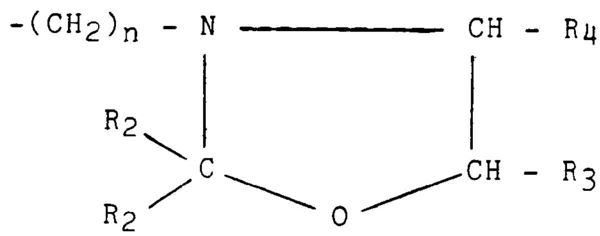

oder

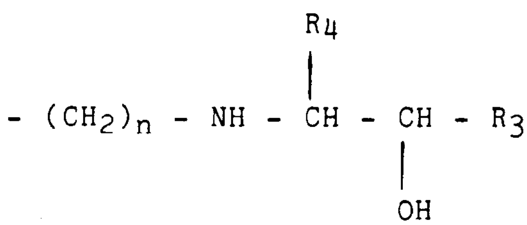

- $R_5$ einen nach Reaktion mit einem aktiven Wasserstoffatom verbleibenden Rest eines in bezug auf die Doppelbindungen monofunktionellen Acryl- oder Methacrylmonomeren und
- $R_6$ ein Wasserstoffatom oder einen Alkylrest

bedeutet.

## Claims

**1.** Process for the preparation of self-crosslinking, cationic paint binders which can be diluted with water after protonation, based on reaction products formed from aminoalkylation products of phenols and epoxy resins obtained by reacting

(1) an aminoalkylation product which contains on average at least one NH group per molecule and has been formed from phenol and/or a substituted phenol, preferably a monoalkylphenol or monoarylphenol or monoaralkylphenol having one or, if appropiate, two phenolic hydroxyl groups, a primary alkylamine and/or primary alkanolamine and/or primary/tertiary alkyldiamine and formaldehyde or a formaldehyde donor, with

(2) a half-masked diisocyanate and, in a further reaction stage,

(3) 50 to 100% of the phenolic hydroxyl groups with epoxy compounds, preferably diepoxy resins having an epoxide equivalent weight between 50 and 2000,

characterized in that 5 to 70 mol %, preferably 10 to 40 mol %, of the glycidyl groups of the diepoxy resins employed in stage (3) are reacted with monoamines and/or diamines before they are reacted with the intermediate product obtained in stage (2) or, if appropriate, at the same time as they are reacted in accordance with stage (3).

**2.** Process according to Claim 1, characterized in that the monoamines employed are primary and secondary amines .

**3.** Process according to Claim 1, characterized in that the monoamines employed are primary and secondary alkanolamines.

**4.** Process according to Claim 1, characterized in that the diamines employed are reaction products of diprimary amines with 2 mol of monoepoxy compound.

**5.** Process according to Claim 1, characterized in that the diamines employed are primary-tertiary diamines.

**6.** Process according to Claim 1, characterized in that the amine-functional compounds employed are oxazolidineamines of the general formulae

(I)

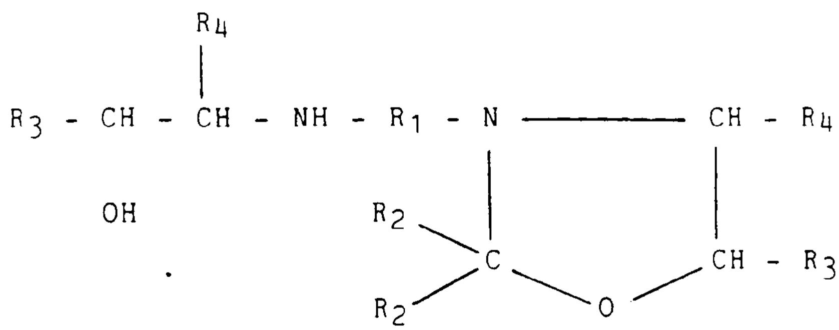

and/or

(II)

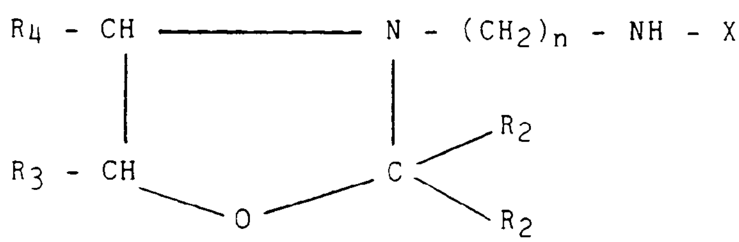

and/or

(III)

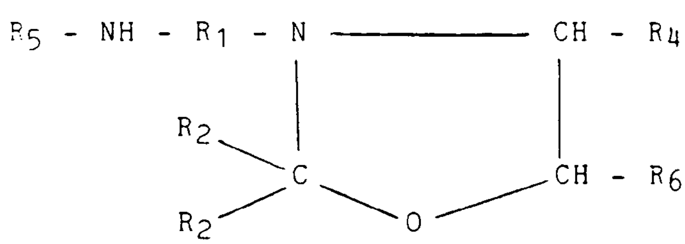

,

in which

$R_1$ denotes a linear or branched or cyclic alkylene radical having 2 to 12 C atoms or an aralkylene radical,

$R_2$ denotes a linear or branched alkyl radical having 1 to 4 C atoms, an aryl radical or an H atom or, for both $R_2$ groups jointly, a ring-forming alkylene radical which is optionally substituted by alkyl, aryl or alkoxy radicals,

$R_3$ denotes a saturated or unsaturated, aliphatic or cycloaliphatic or aromatic hydrocarbon radical which optionally contains ether or ester groupings,

$R_4$ denotes H or $CH_3$-,

n denotes 2 to 4 and

X denotes either

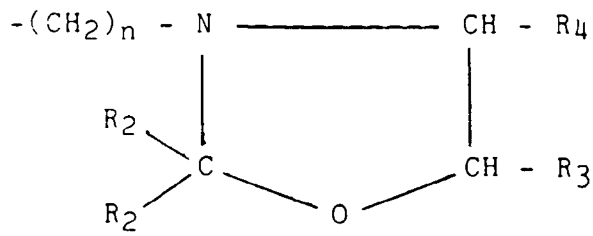

or

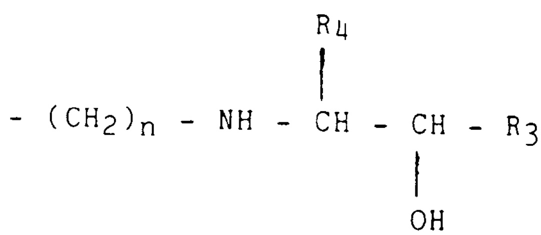

$R_5$ denotes a radical, remaining after reaction with an active hydrogen atom, of an acrylic or methacrylic monomer which is monofunctional in respect of the double bonds, and

$R_6$ denotes a hydrogen atom or an alkyl radical.

## Revendications

1. Procédé pour la préparation de liants pour peintures cationiques, autoréticulables, diluables à l'eau après protonation à base de produits de réaction préparés à partir de produits d'aminoalkylation de phénols et de résines époxydiques, qui ont été obtenus par réaction
   1) d'un produit d'aminoalkylation comportant en moyenne au moins un groupe NH par molécule obtenu à partir de phénol et/ou d'un phénol substitué, de préférence un monoalkyl-, monoaryl- ou monoaralkylphénol avec un ou éventuellement deux groupes hydroxyles phénoliques, d'une alkylamine primaire et/ou d'une alcanolamine primaire et/ou d'une alkyldiamine primaire-tertiaire et de formaldéhyde ou d'un composé libérant du formaldéhyde par scission, avec
   2) un diisocyanate semi-bloqué, et par la réaction suivante
   3) de 50 à 100% des groupes hydroxyles phénoliques avec des composés époxydes, de préférence des résines diépoxydiques ayant un poids équivalent d'époxy entre 50 et 2000, caractérisé en ce que l'on fait réagir 5 à 70% molaire, de préférence 10 à 40% molaire des groupes glycidyles des résines diépoxydiques mises en oeuvre dans l'étape 3) avant leur réaction, avec le produit intermédiaire obtenu dans l'étape 2) ou, le cas échéant simultanément avec la réaction selon l'étape 3), avec des mono- et/ou des diamines.

2. Procédé selon la revendication 1, caractérisé en ce qu'on met en oeuvre, en tant que monoamines, des amines primaires et secondaires.

3. Procédé selon la revendication 1, caractérisé en ce qu'on met en oeuvre, en tant que monoamines, des alcanolamines primaires et secondaires.

4. Procédé selon la revendication 1, caractérisé en ce qu'on met en oeuvre, en tant que diamines, des produits de réaction de amines diprimaires avec 2 moles de composé monoépoxyde.

5. Procédé selon la revendication 1, caractérisé en ce qu'on met en oeuvre, en tant que diamines, des diamines primaires-tertiaires.

6. Procédé selon la revendication 1, caractérisé en ce qu'on met en oeuvre, en tant que composés à fonctionnalité amine, des oxazolidineamines de formules générales

(I)

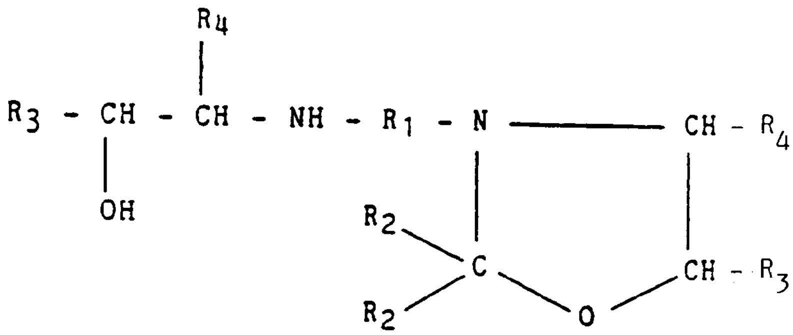

et/ou

(II)

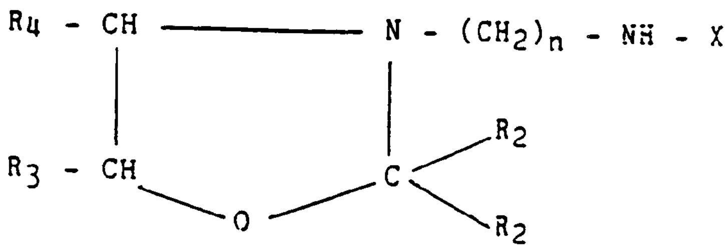

et/ou

(III)

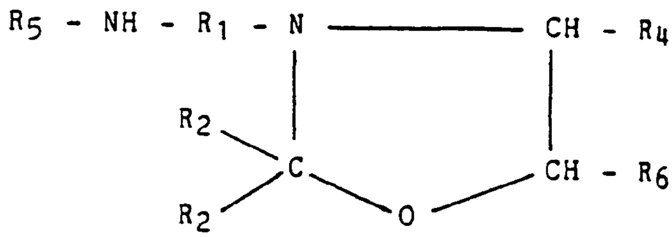

dans lesquelles

| | |
|---|---|
| $R_1$ | représente un reste alkylène à chaîne droite, ramifiée ou cyclique avec 2 à 12 atomes de C ou un reste aralkylène, |
| $R_2$ | représente un reste alkyle à chaîne droite ou ramifiée avec 1 à 4 atomes de C, un reste aryle ou un atome de H ou, pour les deux $R_2$, simultanément un reste alkylène cyclisant, éventuellement substitué par des restes alkyles, aryles ou alcoxy. |
| $R_3$ | représente un reste hydrocarboné aliphatique, cycloaliphatique ou aromatique saturé ou insaturé contenant éventuellement des groupements éthers ou esters, |
| $R_4$ | est H ou $CH_3$- |
| n | est 2 à 4 et |
| X | représente soit |

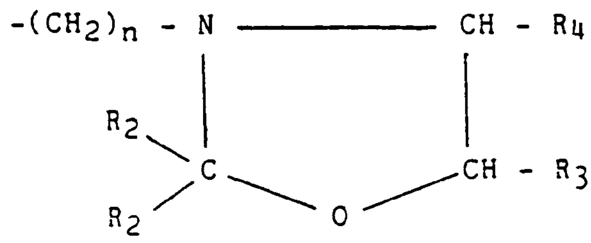

soit

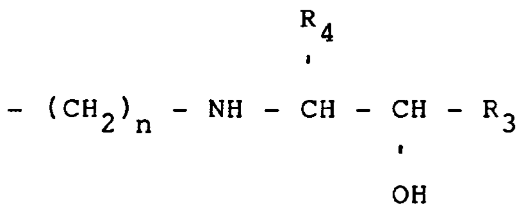

$R_5$ représente un reste d'un monomère acrylique ou méthacrylique monofonctionnel par rapport aux doubles liaisons subsistant après réaction avec un atome d'hydrogène actif et

$R_6$ représente un atome d'hydrogène ou un reste alkyle.